# EUROPÄISCHE PATENTSCHRIFT

(11) **EP 0 648 369 B1**
(45) Veröffentlichungstag und Bekanntmachung des Hinweises auf die Patenterteilung: **29.07.1998**
(21) Anmeldenummer: 94911127.2
(22) Anmeldetag: 08.03.1994
(51) Int. Cl.: G11B 33/04

(54) **AUFBEWAHRUNGSKASSETTE FÜR CD-PLATTEN**
STORAGE CASE FOR COMPACT DISCS (CD)
BOITIER DE RANGEMENT POUR DISQUES COMPACTS

(30) Priorität: 29.04.1993 DE 9306430 U; 17.08.1993 DE 9312288 U
(43) Veröffentlichungstag der Anmeldung: 19.04.1995
(73) Patentinhaber: Deja-Accessoires GmbH, D-51427 Bergisch Gladbach (DE)
(72) Erfinder: DEJA, Günter, D-51491 Overath (DE)
(74) Vertreter: Maxton, Alfred, Dipl.-Ing.
(86) Internationale Anmeldenummer: EP9400711
(87) Internationale Veröffentlichungsnummer: WO9425962

(56) Entgegenhaltungen:
- EP-A- 0 356 539
- EP-A- 0 429 195
- DE-A- 3 425 579
- DE-A- 3 715 187
- DE-A- 4 107 218

## Beschreibung

Die Erfindung betrifft eine Aufbewahrungskassette für einen plattenförmigen Informationsträger mit Ausnehmung im Mittenbereich, insbesondere eine optisch auslesbare digitale Audioplatte (CD), wobei die Kassette einen schachtelförmigen Behälterteil und einen darin eingefügten, im wesentlichen der Kontur des Informationsträgers angepaßten Bettungsteil aufweist, der mit einem zentralen Halte-element versehen ist, das die Ausnehmung des Informationsträgers durchsetzt und das als Verriegelungselement ausgebildete Federzungen aufweist, die jeweils mit einer radial nach außen weisenden Verdickung den Innenrand der Ausnehmung des Informationsträgers übergreifen, gemäß dem Oberbegriff des Anspruchs 1.

Aufbewahrungskassetten dieser Art weisen als Halteelement kronenartig angeordnete Federzungen auf, die druckknopfartig mit der Ausnehmung des Informationsträgers verbindbar sind. Diese Verbindung ist vielfach so straff, daß die Informationsträger nur mit Mühe aus der Kassette herausgenommen werden können. Da die Federzungen radial nach innen gerichtete Endstücke aufweisen, ist es bei einiger Übung möglich, mit dem Zeigefinger auf diese Enden zu drücken und hierbei zumindest einen Teil der Federzunge zurückzubiegen, so daß die Rastverbindung zwischen dem durch die Federzungen gebildeten Halteelement und der Ausnehmung des Informationsträgers, wenn nicht vollständig gelöst, so doch gelockert wird und die Entnahme möglich ist.

In DE-C2-34 25 579 ist eine Aufbewahrungskassette der vorstehend bezeichneten Art beschrieben, bei der die Entnahme dadurch erleichtert werden soll, daß die Federzungen zur Innenseite hin mit einer Druckplatte in fester Verbindung stehen, die ihrerseits elastisch verformbar ist, so daß bei einer Verformung der Druckplatte durch Fingerdruck die Federzungen nach innen gebogen werden und somit die Rastverbindung zwischen Halteelement und Ausnehmung des Informationsträgers freigeben. Die Entnahme soll noch dadurch erleichtert werden, daß Federelemente vorgesehen werden, die durch den eingelegten Informationsträger zusammengedrückt werden und beim Niederdrücken der Druckplatte von der Rückseite des Informationsträger her diesen über die Rast der Federzungen nach oben schieben. Da jedoch die Bettungsteile derartiger Kassetten Massenprodukte darstellen und durchaus Fertigungstoleranzen vorhanden sein können, die eine nur ungenügende oder lose Verrastung zwischen Halteelement und Informationsträger bewirken, weist die Anordnung derartiger Federelemente jedoch den Nachteil auf, das auch ohne Druck auf die Druckplatte die Federelemente den Informationsträger vom Halteelement lösen, so daß gerade der angestrebte Zweck einer sicheren Halterung des Informationsträgers nicht gewährleistet ist.

Aus der DE-A1-37 15 187 ist ferner eine Aufbewahrungskassette herkömmlicher Art bekannt, bei der in die zentrale Bohrung und die die Federzungen abteilenden Schlitte im Bettungsteil ein spinnenförmiger Körper mit nach oben zurückgebogenen Beinen eingesetzt wird, der so ausgebildet ist, das durch einen Druck auf den Körper die Spitzen der Beine aus den Schlitzen nach oben heraustreten und damit den eingelegten Informationsträger anheben sollen. Diese Aufbewahrungskassette weist den Nachteil auf, daß bei einem Druck auf den Körper die gesamte Kraft zur Überwindung der durch die Federzungen bewirkten Haltekraft durch die Beine aufgebracht werden muß. Da die Beine aufgrund der Formgebung in sich verformbar sind, reicht die übertragbare Kraft bei einer großen Haltekraft in manchen Fällen nicht aus, um die Rast in den Federzungen zu überwinden.

Aus EP-A 0 429 195 ist eine Aufbewahrungskassette bekannt, die in ihrem Aufbau und in ihrer Wirkungsweise im wesentlichen der vorstehend beschriebenen Aufbewahrungskassette gem. DE-C2-34 25 579 entspricht. Auch hier sind Federelemente vorgesehen, die die Auflagefläche des Bettungsteils überragen und die erst durch das Einlegen des Informationsträgers niedergedrückt und entsprechend vorgespannt werden. Durch einen Druck auf die den eingelegten Informationsträger haltenden Federzungen wird die Verrastung freigegeben, so daß der Informationsträger durch die Federelemente nach oben geschoben wird. Bei Verschleiß oder Unterschreitung der vorgegebenen Toleranzen kann eine zuverlässige Verrastung zwischen dem Informationsträger und den Federzungen nicht mehr gegeben sein, so daß eine zuverlässige Halterung des Informationsträgers in seiner Kassette nicht möglich ist.

Aus EP-A-0 356 539 ist eine Aufbewahrungskassette bekannt, die ein zentrales Halteelement aufweist, daß die Ausnehmung des einzulegenden Informationsträgers durchsetzt und formschlüssig verriegelt. Dieses Halteelement besteht aus vier radial ausgerichteten bügelförmigen Stegen, die durch einen zentralen Druckknopf miteinander verbunden sind, so daß bei einem Niederdrücken des Druckknopfes die Verrastung zwischen den bügelförmigen Stegen und dem eingelegten Informationsträger freigegeben wird. Unabhängig von den bügelförmigen Stegen sind ebenfalls radial ausgerichtete Hubelemente vorgesehen, die federnd mit dem Druckknopf verbunden sind und die zugleich die Auflagefläche für den zu haltenden Informationsträger bilden. Durch diese Entkoppelung von Verriegelungselementen und Hubelementen ist eine eindeutige Bewegungszuordnung nicht gewährleistet, so daß schon durch geringe Maßabweichungen die Anordnung in ihrer Funktion beeinträchtigt werden kann. Da nur mit dem Druckknopf verbundene Verriegelungselemente vorgesehen sind, ist es notwendig, den Druckknopf so lange niederzudrücken, bis der Informationsträger entnommen ist. Wird der Druckknopf losgelassen bevor der Informationsträger entnommen ist, greift wieder das Verriegelungselement ein, so daß für die Entnahme die Aufbewahrungskassette immer auf einer Unterlage aufgelegt werden muß, da für eine Entnahme immer zwei Hände notwendig sind. Ferner verlangt die Herstellung eines Bettungsteiles mit einem derart kompliziert aufgebauten Halteelement eine aufwendige Spritzform.

Der Erfindung liegt die Aufgabe zugrunde, Aufbewahrungskassetten der eingangs bezeichneten Art bezüglich ihrer Handhabung zu verbessern.

Diese Aufgabe wird gemäß der Erfindung mit den im Kennzeichnungsteil des Anspruchs 1 angegebenen Mitteln gelöst.

Diese Anordnung hat den Vorteil, das über das Betätigungsmittel die Verriegelung bzw. Verrastung zwischen den Federzungen und dem Informationsträger aufgehoben und zugleich der Informationsträger durch die Hubelemente über das Verriegelungselement angehoben wird, so daß der Informationsträger lose aufliegt, wenn das Betätigungsmittel losgelassen wird. Hierdurch wird die Handhabung wesentlich erleichtert. Das Einlegen des Informationsträgers geschieht in üblicher Weise durch Aufdrücken auf das Halteelement.

Dadurch, daß zumindest ein Teil der als Verriegelungsmittel ausgebilderen Federzungen jeweils mit einem sich in der Ebene des Bettungsteiles radial nach außen erstreckenden fingerartigen Hubelement verbunden ist, ergibt sich der Vorteil, daß die Verriegelungselemente und die Hubelemente einstückig als Teil des Bettungsteiles gefertigt werden können. Der weitere Vorteil besteht darin, daß der Verbraucher bei der ihm gewohnten Handhabung derartiger Kassetten durch den Druck auf die freien Enden der Federzungen nicht nur die Verrastung zwischen dem Halteelement und dem Informationsträger aufhebt, sondern in einem gezielten Bewegungsablauf auch der Informationsträger über die Verrastung durch die Federzungen angehoben wird. Ein unbeabsichtigtes Lösen ist damit selbst dann vermieden, wenn infolge der Unterschreitung von Fertigungstoleranzen nur eine schwache Verrastung zwischen Informationsträger und Halteelement gegeben ist. Besonders zweckmässig ist es, wenn das fingerartige Hubelement auf seiner Unterseite mit Abstand zur zugehörigen Federzunge mit einem auf dem Boden des Behälterteils aufliegenden Stützfuß versehen ist. Hierdurch ergibt sich eine genau definierte Hebelwirkung für das Hubeelement, wenn auf das freie Ende der damit verbundenen Federzunge gedrückt wird. Zweckmäßig sind die mit einem Hubelement verbundenen Federzungen über federnde, insbesondere als torsionsfedern wirkende Stege mit dem Befestigungsteil verbunden. Dies ermöglicht in einfacher Weise eine einstückige Ausführung, bei der das Bettungsteil, die Federzungen und die Hubelemente in einem Formvorgang hergestellt werden können.

In zweckmäßiger weiterer Ausgestaltung der Erfindung ist vorgesehen, daß zumindest die freien Enden der Federzungen, die mit Hubelementen versehen sind, jeweils mit radial nach innen gerichteten Verlängerungen zur Bildung einer Fingerdruckfläche versehen sind. Diese Anordnung hat den Vorteil, das für das Aufbringen der Fingerkraft ein verhältnismäßig großer Hebelarm zur Verfügung steht, so daß die Betätigung noch erleichtert wird. Die Verlängerungen weisen hierbei zweckmäßigerweise mindestens die gleiche Dicke auf, wie die Federzungen, so daß der durch die Verlängerungen gebildete Kopfteil der betreffenden Federzunge verhältnismäßig starr ist, so daß hier ein sicheres Lösen der Verrastung gewährleistet ist.

In einer anderen Ausgestaltung ist vorgesehen, daß die Fingerdruckfläche durch einen lose eingesetzten, formschlüssig gehaltenen Knopf gebildet wird. Diese Ausgestaltung besitzt zwar den Nachteil, daß bei der Herstellung einer derartigen Aufbewahrungskassette hier ein zweites Bauelement eingesetzt werden muß. Da es sich hier jedoch nur um einen einfachen Knopf handelt, der nicht in einer genau definierten Zuordnung eingefügt werden muß, läßt sich dies auch in einer automatischen Fügeoperation bewerkstelligen. Der Vorteil besteht jedoch darin, das der eingesetzte Knopf eine andere Farbe aufweisen kann, als der eingesetzte Bettungsteil, so daß hier für den Verbraucher ein sinnfälliger Hinweis auf die Handhabung gegeben ist, insbesondere, wenn beim Verbraucher erfindungsgemäße Kassetten neben Kassetten der herkömmlichen Bauart vorhanden sind.

Die Erfindung wird anhand schematischer Zeichnungen von Ausführungsbeispielen näher erläutert. Es zeigen :
- Fig. 1: eine Aufsicht auf eine Aufbewahrungskassette,
- Fig. 2: eine Aufsicht auf ein zentrales Halteelement in größerem Maßstab,
- Fig. 3: einen Schnitt durch das zentrale Halteelement gem. der Linie III-III in Fig. 2, mit einstückig verbundenem Hubelement,
- Fig. 4: eine Aufsicht auf eine einstückige Ausführungsform mit großer Fingerdruckfläche,
- Fig. 5: einen Schnitt gem. der Linie V-V in Fig. 4,
- Fig. 6: eine abgewandelte Ausführungsform mit einem eingesetzten Hubelement im Schnitt,

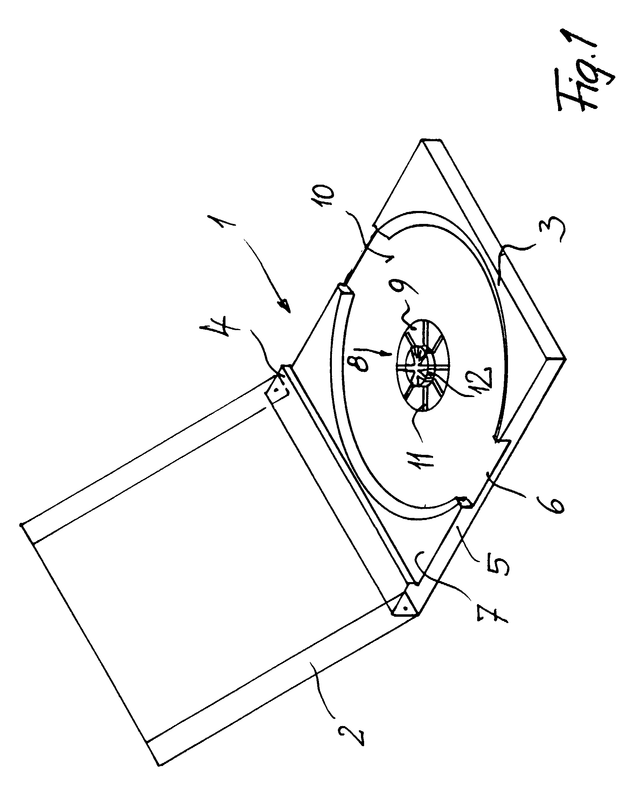

Die in Fig. 1 dargestellte Aufbewahrungskassette für einen plattenförmigen Informationsträger, nachstehend CD genannt, weist einen schachtelförmigen Behälterteil 1 mit Klappdeckel 2 auf, in den ein Bettungsteil 3 formschlüssig eingesetzt ist, der im wesentlichen der Außenkontur der CD angepaßt ist. Der Bettungsteil 3 sowie der schachtelförmige Behälterteil 1 sind hierbei so konzipiert, daß an beiden seitlich an den Halte- und Scharnierrand 4 anschließenden Seitenflächen 5 zu beiden Seiten Ausnehmungen 6 vorgesehen sind, durch die der Rand einer eingelegten CD geringfügig hindurchragt und damit mit einer Hand zwischen Daumen und Mittelfinger erfaßt werden kann. Auf den übrigen Seiten ist das Bettungsteil 3 vertieft ausgebildet und umfaßt die eingelegte CD auf dem Randumfang. Die hierbei in den Ecken gebildeten Zwickelbereiche 7 liegen mit ihrer Fläche geringfügig oberhalb der Fläche einer eingelegten CD.

Das Bettungsteil 3 weist ein zentrales Halteelement 8 auf, daß in seinem Basisbereich von einer Auflagefläche 9 umgeben ist, die geringfügig höher ist als der übrige Bodenbereich 10 des Bettungsteiles 3, so daß eine eingelegte CD auf der Auflagefläche 9 mit ihrem nicht bespielten zentralen Bereich aufliegt, im übrigen aber ohne Berührung mit dem Bettungsteil ist.

Das zentrale Halteelement 8 ist, wie aus Fig. 1 prinzipiell ersichtlich, in seinem Grundaufbau als zylindrischer Zapfen ausgebildet. Bei Aufbewahrungskassetten der herkömmlichen Art ist dieser zylindrische Zapfen an seinem oberen Rand mit einem nach außen vorspringenden Bund versehen, der den Durchmesser am oberen freien Ende geringfügig vergrößert. Der Zapfen ist durch mehrere radiale Schlitze 11 unterteilt, die sich bis in den Bereich der Auflagefläche 9 erstrecken, so daß sich - in der Seitenansicht hakenförmige - Federzungen 12 bilden. Eine aufzubewahrende CD kann mit ihrer Mittenausnehmung auf diesen Zapfen aufgedrückt werden und wird hierbei nach Art eines Druckknopfes verrastet.

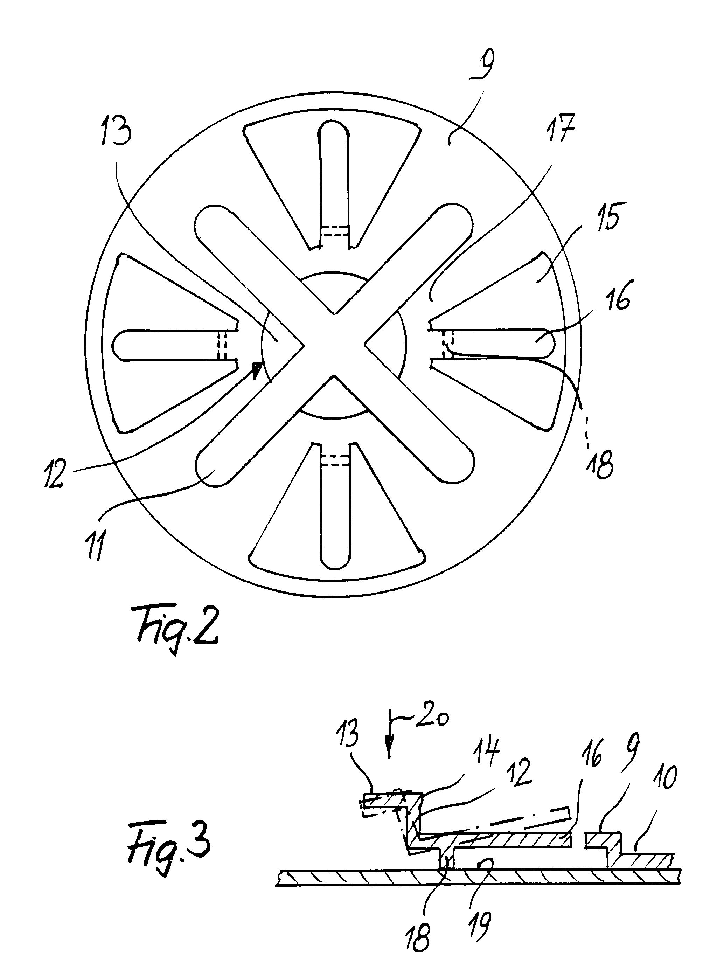

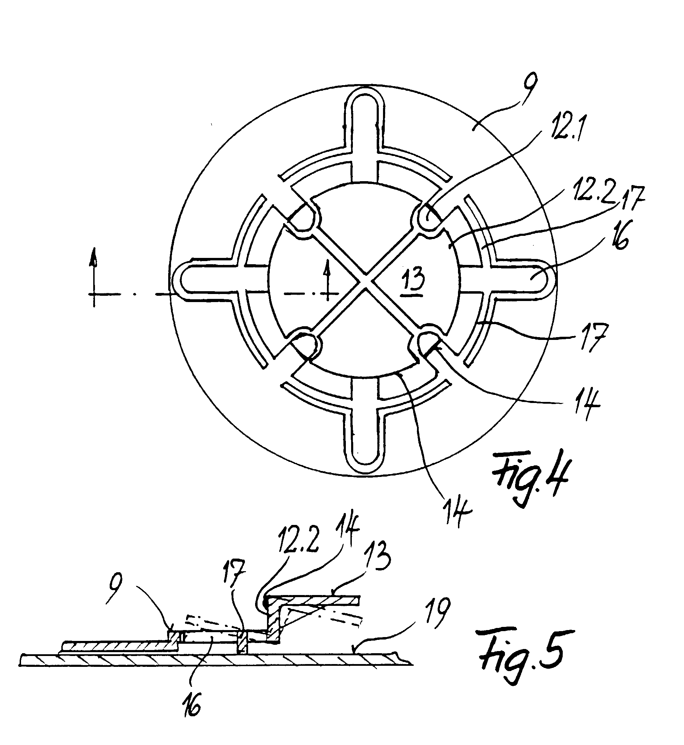

Fig. 2 und 3 zeigen nun in größerem Maßstab eine Ausführungsform mit kombinierten Verriegelungsmittel und Hubelement. Durch die vorerwähnten radialen Schlitze 11, bei dem dargestellten Ausführungsbeispiel sind nur vier Schlitze vorgesehen, wird der das zentrale Halteelement 8 bildende Zapfen in vier Teilstücke unterteilt, die die Federzungen 12 bilden und die eine nach innen gerichteten Deckelteil 13 aufweisen. Auf ihrem Außenumfang sind, wie aus Fig. 3 ersichtlich, die einzelnen Federzungen 12 an ihrem oberen Rand in Verlängerung des Deckelteils 13 mit einem geringen Vorsprung 14 versehen, der zusammen mit der Mittenausnehmung der eingelegten CD die druckknopfartige Rastverbindung bildet.

In dem zwischen je zwei Schlitzen 11 liegenden Teil der Auflagefläche 9 ist nun eine U-förmige Ausnehmung 15 vorgesehen, der aus diesem Bereich des Bettungsteils 3 ein fingerartiges Hubelement 16 abteilt, das in der Ebene der Auflagefläche 9 liegt. Die Ausnehmung 15 endet mit geringem Abstand jeweils an den Schlitzen 11, so daß hier ein Verbindungssteg 17 zu beiden Seiten verbleibt. Auf der Unterseite des Bettungsteils 3 ist zumindest jeweils im Bereich des fingerartigen Hubelementes 16 ein Stützfuß 18 vorgesehen, der auf dem Boden 19 des schachtelförmigen Behältersteils 1 aufliegt.

Drückt man nun in Richtung des Pfeiles 20 (Fig. 3) auf den Deckelteil 13 der Federzunge 12, so kippt die Federzunge 12, wie aus Fig. 3 ersichtlich, um den Stützfuß 18 nach unten ab, wobei die Verbindungsstege 17 als Torsionsfeder wirken. Hierbei wird der Bund 14 zurückgenommen, so daß die Mittenausnehmung der eingelegten CD nach oben abgenommen werden kann. Da das Hubelement 16, wie ebenfalls aus Fig. 3 ersichtlich, aufgrund seiner festen Verbindung mit der Federzunge 12 nach oben verschwenkt wird, wird zugleich mit der durch die Zurücknahme des Bundes 14 bewirkten Verriegelung der Mittenausnehmung der eingelegten CD diese angehoben und über die Ebene des Bundes 14 verschoben. Läßt der Fingerdruck nach, federt die das Verriegelungsmittel bildende Federzunge 12 mit ihrem Bund 14 zurück, ohne jedoch wieder den Rand der Mittenausnehmung zu übergreifen, da mit der gleichen Hand bzw. mit der zweiten Hand die angehobene CD bereits am Rand gefaßt worden ist.

In Fig. 6 ist die Anordnung eines als Fingerdruckfläche dienenden Knopfes 21 angedeutet. Der Knopf 21 ist mit einem Zapfen 22 versehen, der an den Freiraum 23 zwischen den Spitzen der Federzungen eingesteckt wird. Durch einen ringförmig umlaufenden Vorsprung 24 auf der Unterseite des Knopfes 21 wird die Druckkraft auf die Federzungen übertragen. Mittels eines Bundes 25 am Zapfen 22 ist der Knopf 21 lose mit den nach innen gerichteten Spitzen der Federzungen verrastet und somit gegen ein Herausfallen gesichert.

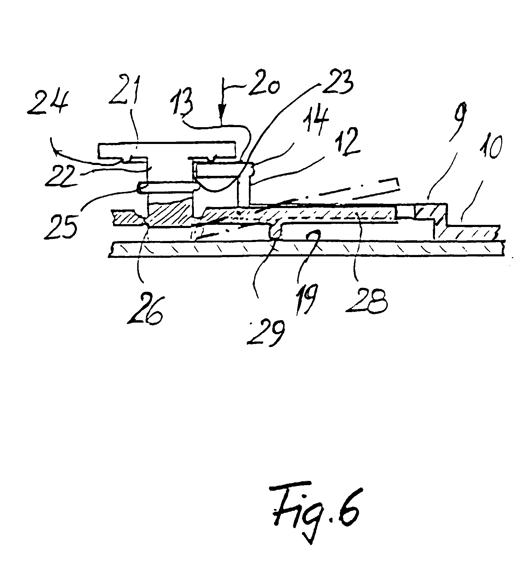

Fig. 4 und Fig. 5 zeigen eine besonders vorteilhafte Ausgestaltung, bei der ein Teil der mit einer Verdickung 14 versehenen Federzungen 12.1 ausschließlich als Verriegelungselement dienen, während der andere Teil der verriegelnden Federzungen 12.2 mit den fingerartigen Hubelementen 16 verbunden sind. Die Federzungen 12.2 sind hierbei jeweils mit einem großflächigen Deckelteil 13 versehen, der eine integrierte Fingerdruckfläche bildet. Die Federzungen 12.1 sind hierbei aus den Deckelteilen im Bereich der Schlitze 11 ausgespart. Die jeweils eine Einheit bildenden Federzungen 12.2 und Hubelemente 16 sind über die als Torsionsfeder wirkenden Stege 17 mit der Auflagefläche 9 am Bettungsteil 3 einstückig verbunden. Die Hubelemente 16 erstrecken sich bis an den Rand der erhöhten Auflagefläche 9. Auf der Unterseite ist im Bereich der Stege 17 jeweils ein Stützfuß 18 angeordnet, der auf dem Boden 19 des Behälterteils 1 aufliegt, so daß eine definierte Schwenkbewegung des fingerartigen Hubelementes 16 bewirkt wird. Die Stege 17 können hierbei einen Rechteckquerschnitt aufweisen, dessen größte Erstreckung senkrecht zur Ebene der Auflagefläche 9 verläuft, so daß eine Torsion ohne Durchbiegung erzielt wird. Die Stege 17 können hierbei so bemessen sein, daß sie zugleich die Funktion der Stützfüsse übernehmen.

Bei der Abwandlung gem. Fig. 6 sind die fingerartigen Hubelemente 16 nicht mit dem Bettungsteils 3 sondern mit dem Zapfen 22 über eine Art Scharniergelenk 26 verbunden. Die fingerartigen Hubelemente 28 liegen hierbei in dem Zwischenraum 11 zwischen den Federzungen 12, so daß ein derartiges Element auch nachträglich in eine herkömmliche Aufbewahrungskassette eingesetzt werden kann. Durch Druck auf die Fläche des Knopfes 21 werden die fingerartigen Hubelemente 28 mit ihrem dem Zapfen 22 zugekehrten Ende nach unten gedrückt, so daß ihre freien Enden um den Stützfuß 18 schwenkend sich nach oben bewegen und die eingelegte CD, wie anhand von Fig. 3 beschrieben, nach oben drücken. Auch hierbei werden durch den Knopf 21 die Federzungen 12 nach unten gedrückt und die Rast zwischen dem Bund 14 und dem Innenrand der CD zumindest gelockert.

## Patentansprüche

1. Aufbewahrungskassette für einen plattenförmigen Informationsträger mit einer Ausnehmung im Mittenbereich, insbesondere für eine optisch auslesbare digitale Audioplatte, wobei die Kassette einen schachtelförmigen Behälterteil (1) und einen darin eingefügten, im wesentlichen der Kontur des Informationsträgers angepaßten Bettungsteils (3) aufweist, der mit einer Auflagefläche (9) und mit einem zentralen Halteelement (8) versehen ist, das die Ausnehmung des Informationsträgers durchsetzt, und das als Verriegelungsmittel ausgebildete Federzungen (12) aufweist, die jeweils mit einer radial nach aussenweisenden Verdickung (14) den Innenrand der Ausnehmung des Informationsträgers übergreifen, wobei wenigstens zwei Hubelemente (16; 28) vorgesehen sind, die den Rand des Informationsträgers im Bereich des Verriegelungselementes untergreifen, und wobei ein Betätigungsmittel (13; 21) zum gezielten Lösen des Verriegelungselementes vorgesehen ist, dadurch gekennzeichnet, daß zumindest ein Teil der als Verriegelungselemente ausgebildeten Federzungen (12) jeweils mit einem sich in der Ebene der Auflagefläche (9) radial nach außen erstreckenden fingerartigen Hubelement (16; 28) und mit radial nach innengerichteten Betätigungsmitteln (13; 21) zum Einwirken auf die Hubelemente (16; 28) festverbunden sind und daß jeweils die mit einem Hubelement (16) verbundene Federzunge (12) über federnde Stege (17) mit dem Bettungsteil (3) verbunden ist, die in der Ebene der Auflagefläche (9) verlaufen.

2. Aufbewahrungskassette nach Anspruch 1, dadurch gekennzeichnet, daß das Hubelement (16; 28) auf seiner unterseite mit Abstand zur zugehörigen Federzunge mit einem auf dem Boden (19) des Behältersteils (1) aufliegenden Stützfuß (18; 29) versehen ist.

3. Aufbewahrungskassette nach Anspruch 1 oder 2, dadurch gekennzeichnet, daß die freien Enden der Federzungen (12) jeweils mit radial nach innen gerichteten Verlängerungen (13) zur Bildung einer Fingerdruckfläche versehen sind.

4. Aufbewahrungskassette nach einem der Ansprüche 1 bis 3, dadurch gekennzeichnet, daß das Betätigungsmittel durch einen lose eingesetzten, formschlüssig gehaltenen Knopf (21) ausgelöst wird.

## Claims

1. A storage case for a disc-shaped data carrier having a cutout in the central region, in particular for an optically readable digital audio disc, the case having a box-shaped container part (1) and a bed part (3) inserted therein and substantially matched to the contour of the data carrier, which part is provided with a contact surface (9) and with a central holding element (8) which passes through the cutout in the data carrier and which has resilient tongues (12) designed as locking means, which each engage over the inner edge of the cutout in the data carrier with a thickened section (14) pointing radially outwards, with at least two lifting elements (16; 28) being provided which engage underneath the edge of the data carrier in the region of the locking element, and with an actuating means (13; 21) being provided for selectively releasing the locking element, characterised in that at least part of the resilient tongues (12) designed as locking elements are each securely connected to a finger-like lifting element (16; 28) extending radially outwards in the plane of the contact surface (9) and to actuating means (13; 21) directed radially inwards for acting on the lifting elements (16; 28) and that in each case the resilient tongue (12) connected to a lifting element (16) is connected to the bed part (3) via resilient crosspieces (17) which extend in the plane of the contact surface (9).

2. A storage case according to Claim 1, characterised in that the lifting element (16; 28) is provided on its underside at a distance from the associated resilient tongue with a supporting foot (18; 29) which lies on the base (19) of the container part (1).

3. A storage case according to Claim 1 or 2, characterised in that the free ends of the resilient tongues (12) are each provided with extensions (13) directed radially inwards to form a finger pressure surface.

4. A storage case according to one of Claims 1 to 3, characterised in that the actuating means is triggered by a loosely inserted, positively held button (21).

## Revendications

1. Boîtier de rangement destiné à un support d'informations en forme de disque comportant un évidement central, notamment à un disque audio numérique pouvant être lu par voie optique, le boîtier comportant une partie (1) en forme de boîte servant de contenant, et une partie d'emboîtement (3) insérée dans cette dernière, qui est globalement adaptée au contour du support d'informations, et qui est munie d'une surface de dépose (9) et d'un élément de retenue central (8) qui traverse l'évidement du support d'informations, et comporte des languettes élastiques (12) réalisées en tant qu'élément de verrouillage, lesquelles passent au-dessus du bord intérieur de l'évidement du support d'informations par un épaississement (14) orienté radialement vers l'extérieur, au moins deux éléments de soulèvement (16 ; 28) étant prévus, qui passent sous le bord du support d'informations au niveau de l'élément de verrouillage, et un moyen d'actionnement (13 ; 21) est prévu pour le desserrage ciblé de l'élément de verrouillage, caractérisé en ce qu'une partie au moins des languettes élastiques (12) réalisées en tant qu'éléments de verrouillage est à chaque fois reliée solidairement à un élément de soulèvement (16 ; 28) de type doigt, qui s'étend radialement vers l'extérieur dans le plan de la surface de dépose (9), et à des moyens d'actionnement (13 ; 21) orientés radialement vers l'intérieur destinés à agir sur les éléments de soulèvement (16 ; 28), et en ce que les languettes élastiques (12) reliées à un élément de soulèvement (16) sont à chaque fois reliées à la partie d'emboîtement (3) par l'intermédiaire de barrettes élastiques (17) qui s'étendent dans le plan de la surface de dépose (9).

2. Boîtier de rangement selon la revendication 1, caractérisé en ce que, à un certain écartement de la languette élastique associée, l'élément de soulèvement (16 ; 28) est muni sur sa face inférieure d'un pied de support (18 ; 29) qui prend appui sur le fond (19) de la partie (1) servant de contenant.

3. Boîtier de rangement selon la revendication 1 ou 2, caractérisé en ce que les extrémités libres des languettes élastiques (12) sont respectivement munies de prolongements (13) orientés radialement vers l'intérieur afin de former une surface d'appui pour les doigts.

4. Boîtier de rangement selon l'une quelconque des revendications 1 à 3, caractérisé en ce que le moyen d'actionnement est déclenché par un bouton (21) inséré de façon lâche, qui est maintenu par complémentarité de forme.
